# EUROPÄISCHE PATENTSCHRIFT

(11) **EP 2 929 672 B1**
(45) Veröffentlichungstag und Bekanntmachung des Hinweises auf die Patenterteilung: **13.04.2016**
(21) Anmeldenummer: 15705007.1
(22) Anmeldetag: 12.02.2015
(51) Int. Cl.: H04L 29/06

(54) **ARBEITSVERFAHREN FÜR EIN SYSTEM SOWIE SYSTEM**
OPERATING METHOD FOR A SYSTEM, AND SYSTEM
PROCÉDÉ DE TRAVAIL D'UN SYSTÈME AINSI QUE SYSTÈME

(30) Priorität: 27.02.2014 DE 102014102627
(43) Veröffentlichungstag der Anmeldung: 14.10.2015
(73) Patentinhaber: Fujitsu Technology Solutions Intellectual Property GmbH, 80807 München (DE)
(72) Erfinder: WEBER, Uwe, 44532 Lünen (DE)
(74) Vertreter: Epping - Hermann - Fischer
(86) Internationale Anmeldenummer: PCT/EP2015/052984
(87) Internationale Veröffentlichungsnummer: WO 2015/128199

(56) Entgegenhaltungen:
- US-A1- 2005 240 994
- US-A1- 2006 200 572
- US-A1- 2009 048 883

## Beschreibung

Die Erfindung betrifft ein Arbeitsverfahren für ein System zum sicheren Bereitstellen einer Datei eines ersten Rechners eines ersten Netzwerks zum Abrufen durch einen zweiten Rechner eines zweiten Netzwerks.

Heutzutage sind Unternehmen, insbesondere Großunternehmen, mit einer komplexen IT-(Informationstechnologie)-Infrastruktur ausgestattet. Mitarbeiter dieser Unternehmen haben in der Regel an ihren Arbeitsplätzen Rechner, welche mittels einer Netzwerkarchitektur, wie beispielsweise Intranet oder Internet, miteinander verbunden sind und auf zentrale Daten und Ressourcen zugreifen. Die Verwaltung der einzelnen Rechner beziehungsweise der Netzwerkarchitektur wird vielfach von einem Hersteller oder Vertreiber der IT-Infrastruktur des Unternehmens durchgeführt. Dabei wird die IT-Infrastruktur in der Regel per Fernzugriff (englisch: remote control) verwaltet oder konfiguriert. Im Zuge einer solchen Fernwartung kann es von Nöten sein, zwischen einem Fernwartungsrechner des Herstellers und einem Rechner eines Mitarbeiters des Unternehmens Dateien wie Softwareinstallationsdateien auszutauschen. Dabei stellen sich verschiedene Anforderungen an einen derartigen Dateiaustausch hinsichtlich eines kontrollierten und sicheren Datenflusses, beispielsweise ohne Manipulation der Datei durch einen unberechtigten Dritten.

Aus der US 2005/0240994 A1 sind ein System, ein Verfahren und ein Gerät bekannt, die einer sicheren Kommunikation zwischen einem vertrauenswürdigen Netzwerk und einem nicht-vertrauenswürdigen Netzwerk dienen. Ein Client ist in dem vertrauenswürdigen Netzwerk angeordnet und kommuniziert über ein Protokoll mit einem Server in einer entmilitarisierten Zone. Der Client schickt Anfragen an den Server, der entsprechende Anschlüsse zu dem nicht-vertrauenswürdigen Netzwerk bereitstellt. Die Eigenschaften des verwendeten Protokolls erlauben eine einzelne Kommunikationssitzung zwischen dem Server und dem Client, um mehrere Kommunikationssitzungen zwischen dem Server und dem nicht-vertrauenswürdigen Netzwerk zu unterstützen. Sind gesendete Daten verschlüsselt, wird eine Entschlüsselung der Daten den Endteilnehmern der Kommunikationssitzung überlassen. Somit wird ein veröffentlichen privater Informationen auf Zonen in dem vertrauenswürdigen Netzwerk beschränkt.

Eine Aufgabe, welche der Erfindung zugrunde liegt, ist es, ein Arbeitsverfahren für ein System zum sicheren Bereitstellen einer Datei eines ersten Rechners eines ersten Netzwerks zum Abrufen durch einen zweiten Rechner eines zweiten Netzwerks sowie ein System zu beschreiben, bei welchen ein kontrollierter und sicherer Datenfluss gewährleistet ist.

Gemäß einem ersten Aspekt der Erfindung wird ein Arbeitsverfahren für ein System zum sicheren Bereitstellen einer Datei eines ersten Rechners eines ersten Netzwerks zum Abrufen durch einen zweiten Rechner eines zweiten Netzwerks beschrieben, wobei das erste Netzwerk und das zweite Netzwerk jeweils über eine Firewall mit einem Perimeter-Netzwerk verbunden sind. Das Arbeitsverfahren weist die folgenden Schritte auf:
- Transferieren der Datei von dem ersten Rechner in einen für den ersten Rechner erreichbaren Speicherbereich eines ersten Datenservers, welcher zu dem Perimeter-Netzwerk gehört;
- Signalisieren eines Erhalts der Datei in dem erreichbaren Speicherbereich des ersten Datenservers an einen ersten Freigaberechner des ersten Netzwerks mit einer Freigabeanfrage zur Weiterleitung der Datei;
- Transferieren der Datei auf einen für den ersten Rechner nicht-erreichbaren Speicherbereich des ersten Datenservers nach Erhalt einer Freigabe zur Weiterleitung durch den ersten Freigaberechner;
- Signalisieren eines Erhalts der Datei in dem nicht-erreichbaren Speicherbereich des ersten Datenservers an einen zweiten Datenserver des Perimeter-Netzwerks;
- Signalisieren eines Erhalts der Datei in dem nicht-erreichbaren Speicherbereich des ersten Datenservers an einen zweiten Freigaberechner des zweiten Netzwerks mit einer Freigabeanfrage zur Weiterleitung der Datei;
- Transferieren der Datei in einen für den zweiten Rechner nicht-erreichbaren Speicherbereich des zweiten Datenservers nach Erhalt einer Freigabe zur Weiterleitung der Datei durch den zweiten Freigaberechner; und
- Transferieren der Datei auf einen für den zweiten Rechner erreichbaren Speicherbereich des zweiten Datenservers.

Mittels des oben bestehenden Arbeitsverfahrens wird ein sicheres Bereitstellen einer Datei eines ersten Rechners eines ersten Netzwerks zum Abruf der Datei durch einen zweiten Rechner eines zweiten Netzwerks gewährleistet. Dabei sind das erste Netzwerk und das zweite Netzwerk nicht direkt, sondern indirekt beispielsweise über eine Firewall, miteinander gekoppelt. Eine direkte Kopplung zweier Netzwerke stellt ein erhebliches Sicherheitsrisiko dar und bietet beispielsweise die Möglichkeit eines potentiellen schädlichen Zugriffs eines unberechtigten Dritten. Daher sind das erste Netzwerk, welches beispielsweise ein Unternehmensnetzwerk ist, und das zweite Netzwerk, welches beispielsweise ein Herstellernetzwerk ist, jeweils mit einem ersten Datenserver beziehungsweise einem zweiten Datenserver des Perimeter-Netzwerks verbunden. Der jeweiligen Verbindung ist beispielsweise eine Firewall zwischengeschaltet.

Der erste Datenserver ist nicht mit dem zweiten Rechner des zweiten Netzwerks verbunden und somit von diesem entkoppelt. Analog dazu ist der zweite Datenserver nicht mit dem ersten Rechner des ersten Netzwerks verbunden. Zudem sind das erste Netzwerk und das zweite Netzwerk voneinander entkoppelt. Dadurch, dass das erste Netzwerk und das zweite Netzwerk voneinander getrennt sind und der erste Datenserver und der zweite Datenserver den Dateiaustausch selbstständig vornehmen, wird eine Trennung der Netzwerke beziehungsweise der Rechner gewährleistet. Dies gewährleistet einen kontrollierten Dateiaustausch beziehungsweise Dateifluss und einen Schutz vor Zugriffen unberechtigter Dritter.

Ein weiterer Vorteil des Arbeitsverfahrens ist, dass dem Dateiaustausch sowohl eine zweite Instanz des ersten Netzwerks, nämlich der erste Freigaberechner, sowie eine zweite Instanz des zweiten Netzwerks, nämlich der zweite Freigaberechner zustimmen müssen, sodass damit eine zusätzliche Sicherheit gegeben ist. Dadurch wird beispielsweise zweimalig überprüft, dass bei dem beabsichtigten Dateiaustausch auch wirklich die richtigen Dateien ausgetauscht werden. Dadurch wird der Dateiaustausch unabhängig von dem ersten Rechner und dem zweiten Rechner überprüft und/oder freigegeben.

Gemäß einer vorteilhaften Ausgestaltung der Erfindung wird nach den Schritten des Transferierens der Datei auf den erreichbaren Speicherbereich des ersten Datenservers und/oder in den sicheren Speicherbereich des zweiten Datenservers die Datei jeweils hinsichtlich datentechnischer Gefahren überprüft. Dadurch kann beispielsweise eine mit einem Virus oder Trojaner befallene oder anderweitig manipulierte Datei erkannt werden.

Optional kann nach Erkennen einer datentechnischen Gefahr die derartig befallene Datei verworfen werden, also beispielsweise gelöscht werden, sodass diese Datei keinen Schaden in einem Netzwerk oder auf einem Rechner anrichten kann.

In weiteren vorteilhaften Ausgestaltungen der Erfindung umfasst der Schritt des Signalisierens eines Erhalts der Datei an den ersten Freigaberechner und/oder an den zweiten Freigaberechner das Senden einer Email. Damit ist eine einfache Möglichkeit gegeben, mittels welcher der Dateierhalt mitgeteilt werden kann.

Gemäß einem zweiten Aspekt der Erfindung wird ein System beschrieben, dazu eingerichtet ist, ein Arbeitsverfahren gemäß dem ersten Aspekt der Erfindung auszuführen. Das System ermöglicht im Wesentlichen die vorgenannten Vorteile.

Weitere Ausgestaltungen und Vorteile der Erfindung sind in den Unteransprüchen sowie in der nachfolgenden Beschreibung eines Ausführungsbeispiels unter Zuhilfenahme der angehängten Figuren beschrieben.

In den Figuren zeigen:
- Figur 1: eine schematische Darstellung eines Systems und
- Figur 2: ein Ablaufdiagramm eines Arbeitsverfahrens für das System zum sicheren Bereitstellen einer Datei.

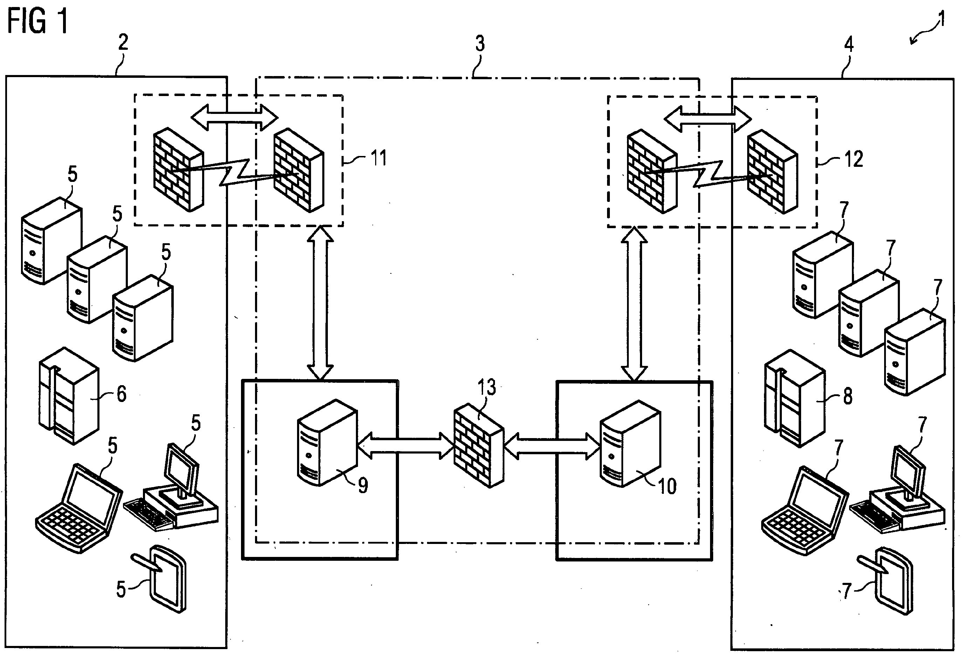

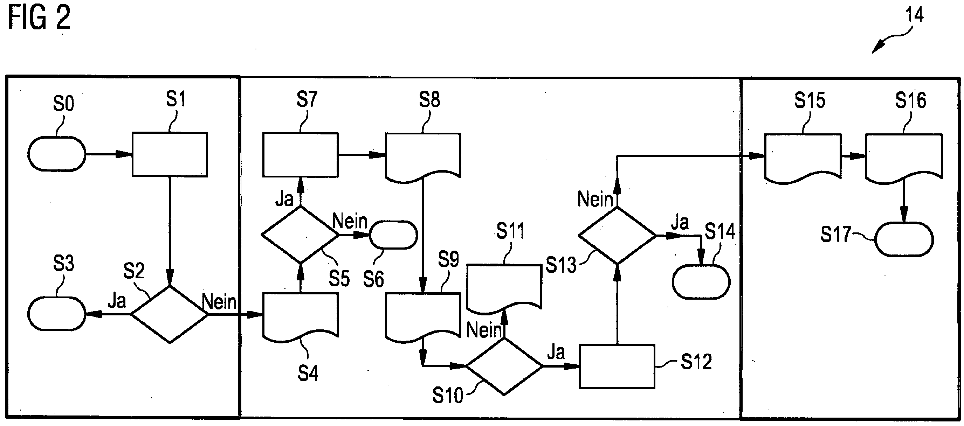

Figur 1 zeigt ein System 1, welches ein erstes Netzwerk 2, ein Perimeter-Netzwerk 3 und ein zweites Netzwerk 4 aufweist. Das System 1 kann auch als Computernetzwerk-Infrastruktur bezeichnet werden. Die beiden Netzwerke 2 und 4 sind als Kommunikationsnetzwerke wie beispielsweise als ein Lokal Area Network (LAN) oder als ein Wide Area Network (WAN) ausgebildet. Das erste Netzwerk 2 repräsentiert das Netzwerk eines Unternehmens. Das zweite Netzwerk 4 repräsentiert das Netzwerk eines Herstellers und ist geographisch entfernt von dem ersten Netzwerk 2 errichtet. Die beiden Netzwerke 2 und 4 können alternativ auch andere Netzwerke repräsentieren und müssen nicht zwingend geographisch entfernt angeordnet sein. Bei dem Perimeter-Netzwerk 3 handelt es sich um ein zwischengeschaltetes Netzwerk, über welches ein kontrollierter und sicherer Dateiaustausch, wie später anhand von Figur 2 beschrieben, ermöglicht wird. Bei dem Perimeter-Netzwerk 3 kann es sich beispielsweise um das Internet oder ein WAN handeln.

Alternativ kann das Perimeter-Netzwerk 3 auch als sogenannte demilitarisierte Zone (DMZ) ausgebildet sein, welche ein Rechner-Netzwerk mit sicherheitstechnisch kontrollierten Zugriffsmöglichkeiten darstellt. Rechner innerhalb der DMZ sind typischerweise mittels einer oder mehrerer Firewalls mit anderen Netzen wie dem ersten Netzwerk 2 und dem zweiten Netzwerk 4 gekoppelt. Der Zugriff auf einzelne Dienste der Rechner der DMZ kann gestattet sein, beispielsweise durch Freigabe beziehungsweise Öffnen bestimmter Ports.

Dem ersten Netzwerk 2 gehören mehrere erste Rechner 5 sowie ein erster Freigaberechner 6 an. Bei dem ersten Rechner 5 sowie dem Freigaberechner 6 kann es sich beispielsweise um herkömmliche Tower-PCs, Desktop-PCs, Notebooks, Laptops oder sogenannte Tablet-PCs handeln. Innerhalb des ersten Netzwerks 2 können die ersten Rechner 5 sowie der erste Freigaberechner 6 untereinander kommunizieren, wobei zum Austausch von Daten beispielsweise Protokolle wie TCP, UDP, SMB, NFS und/oder AFP eingesetzt werden. Es sei darauf hingewiesen, dass die Anzahl der ersten Rechner 5 sowie des Freigaberechners 6 von dem in Figur 1 gezeigten Ausführungsbeispiel abweichen kann. Der erste Freigaberechner 6 stellt eine dem ersten Rechner 5 übergeordnete Instanz dar, beispielsweise einen Vorgesetzten eines Mitarbeiters und/oder einen Administrator. Dies bedeutet, dass dem ersten Freigaberechner 6 höhere Rechte obliegen als einem ersten Rechner 5.

Das zweite Netzwerk 4 ist analog zu dem ersten Netzwerk 2 ausgebildet und umfasst eine Mehrzahl von zweiten Rechnern 7 sowie einen zweiten Freigaberechner 8.

Das Perimeter-Netzwerk 3 weist einen ersten Datenserver 9 und einen zweiten Datenserver 10 auf. Bei den beiden Datenservern handelt es sich um sogenannte Secure FTP-(File Transfer Protocol) Server. Einer oder beide Datenserver 9 und 10 können an unterschiedlichen geographischen Orten angeordnet sein, beispielsweise beim Hersteller oder Unternehmer. Beispielsweise kann das Perimeter-Netzwerk 3 als ein virtuelles Netzwerk (VPN) ausgebildet sein. In einer besonders sicheren Variante können die Datenserver 9 und 10 Teil eines von den Netzwerken 2 und 4 unabhängigen Netzwerks eines Dritten, beispielsweise einem Netzwerkanbieter, sein. Weiter kann ein oder beide Datenserver 9 und 10 ein Cloud-Server sein.

Jeder der beiden Datenserver 9 und 10 weist zumindest einen Speicher mit zwei unterschiedlichen Speicherbereichen auf. Dabei kann der Speicher jeweils ein oder mehrere physikalische Speichermedien umfassen. Der erste Datenserver 9 weist einen für den ersten Rechner 5 erreichbaren Speicherbereich sowie einen für einen ersten Rechner 5 nicht-erreichbaren Speicherbereich auf. Bei dem erreichbaren Speicherbereich des ersten Datenservers 9 handelt es sich um einen Teil des Speichers, auf welchen ein erster Rechner 5 aus dem ersten Netzwerk 2 zugreifen kann. Dieser erreichbare Speicherbereich kann auch als Transferspeicherbereich des ersten Datenservers 9 bezeichnet werden.

Ein Dateiaustausch zwischen dem ersten Rechner 5 und dem ersten Datenserver 9 beziehungsweise einem zweiten Rechner 7 und dem zweiten Datenserver 10 erfolgt gemäß dem Secure File Transfer Protocol (SFTP). Hierbei muss sich der erste Rechner 5 bei dem Datenserver 9 zunächst authentifizieren, beispielsweise mittels eines Benutzernamens und eines Kennworts. Der erste Rechner 5 baut somit eine Verbindung zu dem ersten Datenserver 9 auf. Somit ist es einem ersten Rechner 5 möglich, eine oder mehrere Dateien in den erreichbaren Speicherbereich des ersten Datenservers 9 abzulegen. Es sind allerdings alternativ auch andere Datenübertragungsprotokolle möglich.

Zwischen das Perimeter-Netzwerk 3 und das erste Netzwerk 2 ist eine erste Firewall 11 geschaltet, welche die Rechner des ersten Netzwerks 2 und den ersten Datenserver 9 vor unerwünschten Netzwerkzugriffen schützt. Die erste Firewall 11 dient dazu, Netzwerkzugriffe auf den ersten Datenserver 9 zu regulieren und im Wesentlichen auf eine Kommunikation mit dem ersten Netzwerk 2 zu beschränken. Die erste Firewall 11 überwacht den durch die erste Firewall 11 laufenden Datenverkehr und entscheidet anhand vorbestimmter Regeln, ob eine Netzwerkkommunikation, also beispielsweise ein Dateiaustausch, zugelassen wird. Beispielsweise gestattet die erste Firewall 11 einen Dateiaustausch nur gemäß vorbestimmter Protokolle, nur über vorbestimmte Ports und/oder nur für vorbestimmte Netzwerkadressen des ersten Netzwerks 2.

Analog zu dem ersten Datenserver 9 verhält es sich mit dem erreichbaren Speicherbereich des zweiten Datenservers 10, welcher für einen zweiten Rechner 7 des zweiten Netzwerks 4 erreichbar ist. Hierfür ist das zweite Netzwerk 4 über eine zweite Firewall 12 analog zu der ersten Firewall 11 mit dem Perimeter-Netzwerk 3 verbunden, wobei die zweite Firewall 12 im Wesentlichen ausschließlich eine Netzwerkkommunikation zwischen dem zweiten Datenserver 10 und dem zweiten Netzwerk 4 gestattet.

Bei den nicht-erreichbaren Speicherbereichen des ersten Datenservers 9 beziehungsweise des zweiten Datenservers 10 handelt es sich um Speicherbereiche, welche für keinen der Rechner des ersten Netzwerks 2 beziehungsweise des zweiten Netzwerks 4 zugänglich ist. Somit ist es keinem der Rechner 5, 6, 7 oder 8 möglich, Dateien in einem der nicht-erreichbaren Speicherbereiche abzulegen. Die erste Firewall 11 und die zweite Firewall 12 ermöglichen keine direkte Netzwerkkommunikation zwischen einem Rechner des ersten Netzwerks 2 und einem Rechner des zweiten Netzwerks 4.

Der erste Datenserver 9 und der zweite Datenserver 10 sind für eine Kommunikation gemäß dem SFTP untereinander über eine dritte Firewall 13 verbunden. Die dritte Firewall 13 ist ähnlich den beiden Firewalls 11 und 12 eingerichtet und gestattet ausschließlich eine Netzwerkkommunikation zwischen dem ersten Datenserver 9 und dem zweiten Datenserver 10. Die Datenserver 9 und 10 sind für einen ausschließlichen Dateiaustausch untereinander eingerichtet.

Der erste Datenserver 9 steht unter dem ausschließlichen, administrativen Zugriff des ersten Freigaberechners 6, welcher somit eine Verwaltung des Datenservers 9 vornehmen kann. Ebenso steht der zweite Datenserver 10 steht unter dem ausschließlichen, administrativen Zugriff des zweiten Freigaberechners 8 des zweiten Netzwerks 4.

Es sei an dieser Stelle darauf hingewiesen, dass keiner der Rechner des ersten Netzwerks 2 auf den zweiten Datenserver 10 zugreifen kann beziehungsweise mit diesem kommunizieren kann. Somit sind die Rechner des ersten Netzwerks 2 von dem zweiten Datenserver 10 getrennt. Analog verhält es sich mit den Rechnern des zweiten Netzwerks 4, welche nicht auf den ersten Datenserver 9 zugreifen können. Optional kann es auch nur bestimmten, autorisierten ersten Rechnern 5 des ersten Netzwerks 2 erlaubt sein, auf den erreichbaren Speicherbereich des ersten Datenservers 9 zuzugreifen. Derartiges ist auch für einen Teil der zweiten Rechner 7 des zweiten Netzwerks 4 zum Zugriff auf den erreichbaren Speicherbereich des zweiten Datenservers 10 denkbar. Für die Verwirklichung einer derartigen Zugriffskontrolle gibt es verschiedene Möglichkeiten. So kann die Kommunikation zwischen einem Datenserver 9 oder 10 und einem weiteren Rechner eines anderen Netzwerks, beispielsweise dem ersten Rechner 5 beziehungsweise einem zweiten Rechner 7, eingeschränkt sein, beispielsweise durch Vorgabe bestimmter IP-Adressen. Weiter können Zugriffsrechte notwendig sein für die Kommunikation der Server. Zusätzlich oder alternativ kann eine verschlüsselte Netzwerkkommunikation oder ein verschlüsselter Netzwerktransfer vorgesehen sein. Zusätzliche oder alternativ können digitale Zertifikate oder digitale Schlüssel verwendet werden, um einen Rechner 5 bzw. 7 als vertrauliche Quelle zu authentifizieren und diesem den Zugriff auf den jeweiligen erreichbaren Speicherbereich zu ermöglichen. Weiter können ein oder mehrere angepasste Firewalls die Kommunikation regeln.

Das anhand von Figur 1 beschriebene System 1 ist dazu eingerichtet, ein Arbeitsverfahren 14 zum sicheren Bereitstellen einer Datei eines ersten Rechners 5 des ersten Netzwerks 2 zum Abrufen durch einen zweiten Rechner 7 des zweiten Netzwerks 4 auszuführen, welches im Folgenden mit Hilfe des in Figur 2 gezeigten Ablaufdiagramms beschrieben wird.

Das Arbeitsverfahren 14 wird in einem Schritt S0 gestartet, wobei gegebenenfalls Variablen initialisiert werden.

In einem ersten Schritt S1 transferiert ein erster Rechner 5 eine Datei in den erreichbaren Speicherbereich des ersten Datenservers 9. Hierzu authentisiert sich der erste Rechner 5 entsprechend des SFTP-Protokolls bei dem Datenserver 9 und legt die Datei in dem erreichbaren Speicherbereich des ersten Datenservers 9 ab.

Der erste Datenserver 9 ist dazu eingerichtet, den erreichbaren Speicherbereich, insbesondere dessen Dateisystem, hinsichtlich Speicheraktivitäten oder Speicherveränderungen zu überwachen. So werden Schreibzugriffe auf den erreichbaren Speicherbereich beispielsweise durch einen Deamon-Prozess erkannt, welche den weiteren Ablauf des Arbeitsverfahrens 14 in Gang setzen.

Wird erkannt, dass die Datei des ersten Rechners 5 in den erreichbaren Speicherbereich des ersten Datenservers 9 transferiert wurde, so wird die Datei in einem nächsten Schritt S2 durch den ersten Datenserver 9 hinsichtlich datentechnischer Gefahren überprüft.

In dem zweiten Schritt S2 wird beispielsweise mittels einer auf dem ersten Datenserver 9 ablaufenden Software geprüft, ob es sich bei der Datei um eine schadhafte Datei, also beispielsweise eine mit einem Virus oder mit einem Trojaner befallene Datei, handelt.

Wird eine derartige schadhafte Datei erkannt, so wird in einem Schritt S3 die Datei verworfen, beispielsweise gelöscht oder in einen Quarantänebereich verschoben. Optional kann im Anschluss an den Schritt S3 das Löschen der Datei einem Rechner, beispielsweise dem die Datei transferierenden Rechner 5 des ersten Netzwerks 2 oder dem ersten Freigaberechner 6, signalisiert werden. Die Signalisierung kann beispielsweise durch Versenden einer entsprechenden elektronischen Benachrichtigung wie einer Email-Nachricht durch den ersten Datenserver 9 geschehen. Hierzu ist der erste Datenserver 9 als Server Email-Server eingerichtet. Der Versand der Email-Nachricht kann gemäß einem der folgenden Protokolle erfolgen: SMTP, IMAP und/oder POP3. Alternativ kann die Signalisierung auch durch Erzeugen von akustischen oder visuellen Signalen, beispielsweise mittels eines Lautsprechers bzw. einer LED, geschehen. In einer weiteren Alternative kann auch eine Datei erzeugt werden, beispielsweise auf dem Datenserver 9 selbst, dem ersten Rechner 5 oder dem ersten Freigaberechner 6. In einer weiteren Alternative können auch digitale Netzwerknachrichten versandt werden, beispielsweise gemäß dem SNMP-Netzwerkprotokoll (englisch: Simple Network Management Protocol).

Wird bei der Überprüfung der Datei festgestellt, dass es sich um eine ordnungsgemäße, also keine schadhafte Datei handelt, so wird das Arbeitsverfahren 14 mit einem Schritt S4 fortgesetzt, in welchem der Erhalt der Datei in dem erreichbaren Speicherbereich des ersten Datenservers 9 an den ersten Freigaberechner 6 mit einer Freigabeanfrage zur Weiterleitung der Datei signalisiert wird. In anderen Worten ausgedrückt, wird dem ersten Freigaberechner 6 durch den ersten Datenserver 9 mitgeteilt, dass eine ordnungsgemäße, sichere Datei in dem erreichbaren Speicherbereich des ersten Datenservers 9 gespeichert wurde. Das Signalisieren kann wiederum das Versenden einer elektronischen Benachrichtigung an den ersten Freigaberechner 6 umfassen. Alternativ kann der Erhalt der Datei auch anderweitig, beispielsweise durch den ersten Rechner 5, dem ersten Freigaberechner 6 signalisiert werden.

In einem nächsten Schritt S5 wird nun geprüft, ob der erste Freigaberechner 6 eine Freigabe zur Weiterleitung der Datei erteilt. Die Freigabe erfolgt ebenfalls durch Versenden einer Email-Nachricht an den ersten Datenserver 9 gemäß einem der oben genannten Protokolle.

Erhält der erste Datenserver 9 keine Freigabe zur Weiterleitung der Datei, so wird in einem Schritt S6 die Datei verworfen. Analog zu Schritt S3 kann im Anschluss an Schritt S6 auch eine elektronische Benachrichtigung versandt werden. Das Verwerfen der Datei kann beispielsweise durch einen Ablauf eines bestimmten Zeitintervalls ohne Empfang einer Freigabe ausgelöst werden. Alternativ ist es auch denkbar, dass der erste Freigaberechner 6 aktiv die Weiterleitung der Datei ablehnt und dies dem ersten Datenserver 9, beispielsweise wiederum mittels dem Versenden einer elektronischen Benachrichtigung, mitteilt.

Stimmt der erste Freigaberechner 6 der Weiterleitung der Datei zu, so wird die Datei in einem dem Schritt S5 anschließenden Schritt S7 auf den für den ersten Rechner 5 nicht-erreichbaren Speicherbereich des ersten Datenservers 9 transferiert.

In einem nächsten Schritt S8 signalisiert der erste Datenserver 9 dem zweiten Datenserver 10, dass die Datei in den nicht-erreichbaren Speicherbereich des ersten Datenservers 9 transferiert wurde. Hierbei bieten sich wiederum verschiedene Möglichkeiten der Signalisierung, wie beispielsweise anhand des Schrittes S3 angegeben.

In einem nächsten Schritt S9 signalisiert der zweite Datenserver 10 den Erhalt der Datei in dem nicht-erreichbaren Speicherbereich des ersten Datenservers 9 an den zweiten Freigaberechner 8 mit einer Freigabeanfrage zur Weiterleitung der Datei. Diese Signalisierung entspricht dabei im Wesentlichen der des Schritts S4.

Analog zu dem Schritt S5 wird nun in einem Schritt S10 überprüft, ob eine Freigabe zur Weiterleitung der Datei erhalten wurde.

Wird keine Freigabe zur Weiterleitung der Datei seitens des zweiten Freigaberechners 8 erhalten, so wird Schritt S10 mit Schritt S11 fortgesetzt, in welchem analog zu dem sechsten Schritt S6 die Datei verworfen wird.

Wird eine Freigabe zur Weiterleitung der Datei mitgeteilt, so wird der zehnte Schritt S10 mit einem Schritt S12 fortgeführt, in welchem die Datei in einen für den zweiten Rechner 7 nicht-erreichbaren Speicherbereich des zweiten Datenservers 10 transferiert wird.

In einem nächsten Schritt S13 wird analog zu dem Schritt S2 die Datei erneut hinsichtlich datentechnischer Gefahren überprüft. Wird eine datentechnische Gefahr erkannt, so wird in einem nächsten Schritt S14 analog zu dem Schritt S3 Arbeitsverfahren.

Wird keine datentechnische Gefahr erkannt, so wird der Schritt S13 mit einem Schritt S15 fortgeführt, in welchem die Datei in einen für zweiten Rechner 7 erreichbaren Speicherbereich des zweiten Datenservers 10 kopiert.

In einem weiteren Schritt S16 wird dem zweiten Rechner 7 wie oben beschrieben signalisiert, dass die Datei auf einem für den zweiten Rechner 7 erreichbaren Speicherbereich des zweiten Datenservers bereitliegt.

In einem Schritt S17 wird das Arbeitsverfahren 14 beendet.

Bei dem mit Hilfe von Figur 2 beschriebenen Arbeitsverfahren 14 können einige Schritte optional auch weggelassen werden. So kann beispielsweise ein Überprüfen hinsichtlich datentechnischer Gefahren gemäß einem der Schritte S2 oder S13 verzichtet werden. Des Weiteren kann beispielsweise auf die Signalisierung im Schritt S16 verzichtet werden.

Optional wird das Arbeitsverfahren 14 nach einem der Schritte S3, S6, S12 und/oder S15 abgebrochen und beendet.

Optional wird einem oder mehreren Schritten des Arbeitsverfahrens 14 jeweils ein Eintrag in eine Log-Datei geschrieben. Die Log-Datei kann beispielsweise auf dem ersten Rechner 5, dem zweiten Rechner 7, oder den beiden Freigaberechnern 6 oder 8 gespeichert werden. Alternativ kann die Log-Datei auch auf einem Datenserver 9 oder 10 gespeichert werden, beispielsweise in dem erreichbaren Speicherbereich. Hierdurch kann beispielsweise ein Schritt des beschriebenen Arbeitsverfahrens 14 ausgelöst werden. Zudem kann jeweils vorgesehen sein, dass auf diese Log-Datei nur eine authentifizierte Person, beispielsweise ein Administrator, zugreifen kann. Zusätzlich oder alternativ kann die Log-Datei entsprechend markiert oder gekennzeichnet werden, so dass beispielsweise die Anfrage und/oder Erteilung der Freigaben wie gemäß den Schritten S5 bis S7 bzw. S9 bis S11 entfallen können. Alternativ können auch mehrere Log-Dateien gespeichert werden, beispielsweise eine Log-Datei pro an dem Arbeitsverfahren 14 beteiligtem Rechner bzw. Server.

Eine Log-Datei wird auch als Ereignisprotokolldatei bezeichnet und listet die Aktionen oder Schritte des Arbeitsverfahrens 14 auf. Beispielsweise kann dort aufgelistet sein, zu welcher Zeit welcher Schritt des Arbeitsverfahrens 14 ausgeführt wurde und/oder um welche Datei es sich handeln. Dadurch kann beispielsweise im Zuge einer Untersuchung später anhand der Log-Datei eine Rekonstruktion des Arbeitsverfahrens 14 vorgenommen werden.

Mittels des beschriebenen Arbeitsverfahrens 14 kann ein kontrollierter Dateiaustausch zwischen einem ersten Rechner 5 und einem zweiten Rechner 7 gewährleistet werden. Zusammengefasst ist es bei dem Arbeitsverfahren 14 notwendig, dass dem Dateiaustausch sowohl ein erster Freigaberechner 6 des ersten Netzwerks 2 sowie ein zweiter Freigaberechner 8 des zweiten Netzwerks 4 zustimmen müssen. Somit wird der Dateiaustausch von zwei Instanzen überprüft, wodurch die Sicherheit und eine Kontrolle über den Dateiaustausch besonders hoch sind. Ein weiterer Vorteil des beschriebenen Arbeitsverfahrens 14 ist, dass das erste Netzwerk 2 und das zweite Netzwerk 4 nicht miteinander verbunden sind. Ein weiterer Vorteil ist, dass der erste Datenserver 9 und der zweite Datenserver 10 den Dateiaustausch zwischen den nicht-erreichbaren Speicherbereichen selbstständig organisieren, was die Gefahr vor einem Eingriff unberechtigter Dritter reduziert.

Das anhand der Figuren beschriebene Arbeitsverfahren 14 kann auch umgekehrt ablaufen, wenn ein zweiter Rechner 7 einem ersten Rechner 5 eine Datei bereitstellen möchte. Dabei werden die oben beschriebenen Schritte S0 bis S17 analog ausgeführt.

### Bezugszeichenliste

- 1: System
- 2: erstes Netzwerk
- 3: Perimeter-Netzwerk
- 4: zweites Netzwerk
- 5: erster Rechner
- 6: erster Freigaberechner
- 7: zweiter Rechner
- 8: zweiter Freigaberechner
- 9: erster Datenserver
- 10: zweiter Datenserver
- 11: erste Firewall
- 12: zweite Firewall
- 13: dritte Firewall
- 14: Arbeitsverfahren
- S0 bis S17: Schritte

## Patentansprüche

1. Arbeitsverfahren (14) für ein System (1) zum sicheren Bereitstellen einer Datei eines ersten Rechners (5) eines ersten Netzwerks (2) zum Abrufen durch einen zweiten Rechner (7) eines zweiten Netzwerks (4), wobei das erste Netzwerk (2) und das zweite Netzwerk(4) jeweils über eine Firewall (11, 12) mit einem Perimeter-Netzwerk (3) verbunden sind,
mit den Schritten:
- Transferieren der Datei von dem ersten Rechner (5) in einen für den ersten Rechner (5) erreichbaren Speicherbereich eines ersten Datenservers (9), welcher dem Perimeter-Netzwerk (3) zugewiesen ist;
- Signalisieren eines Erhalts der Datei in dem erreichbaren Speicherbereich des ersten Datenservers (9) durch den ersten Datenserver (9) an einen ersten Freigaberechner (6) des ersten Netzwerks (2) mit einer Freigabeanfrage zur Weiterleitung der Datei;
- Transferieren der Datei auf einen für den ersten Rechner (5) nicht-erreichbaren Speicherbereich des ersten Datenservers (9) nach Erhalt einer Freigabe zur Weiterleitung durch den ersten Freigaberechner (6);
- Signalisieren eines Erhalts der Datei in dem nicht erreichbaren Speicherbereich des ersten Datenservers (9) durch den ersten Datenserver (9) an einen zweiten Datenserver (10) des Perimeter-Netzwerks (3);
- Signalisieren eines Erhalts der Datei in dem nicht-erreichbaren Speicherbereich des ersten Datenservers (9) durch den zweiten Datenserver (10) an einen zweiten Freigaberechner (8) des zweiten Netzwerks (4) mit einer Freigabeanfrage zur Weiterleitung der Datei;
- Transferieren der Datei in einen für den zweiten Rechner (7) nicht-erreichbaren Speicherbereich des zweiten Datenservers (10) nach Erhalt einer Freigabe zur Weiterleitung der Datei durch den zweiten Freigaberechner (8); und
- Transferieren der Datei auf einen für den zweiten Rechner (7) erreichbaren Speicherbereich des zweiten Datenservers (10).

2. Arbeitsverfahren (14) nach Anspruch 1, wobei nach dem Schritt des Transferierens der Datei auf den erreichbaren Speicherbereich des ersten Datenservers (9) der ersten Datenserver (9) die Datei hinsichtlich datentechnischer Gefahren überprüft.

3. Arbeitsverfahren (14) nach einem der vorhergehenden Ansprüche, wobei nach dem Schritt des Transferierens der Datei in den sicheren Speicherbereich des zweiten Datenservers (10) der zweite Datenserver (10) die Datei hinsichtlich datentechnischer Gefahren überprüft.

4. Arbeitsverfahren (14) nach einem der Ansprüche 2 oder 3, wobei bei Feststellen einer datentechnischen Gefahr die Datei verworfen und das Arbeitsverfahren abgebrochen wird.

5. Arbeitsverfahren (14) nach einem der vorhergehenden Ansprüche, wobei in dem Schritt des Signalisierens eines Erhalts der Datei an den ersten Freigaberechner (6) und/oder an den zweiten Freigaberechner (8) innerhalb eines vorbestimmten Zeitintervalls nach Erhalt keiner Freigabe zur Weiterleitung der Datei die Datei verworfen und das Arbeitsverfahren abgebrochen wird.

6. Arbeitsverfahren (14) nach einem der vorhergehenden Ansprüche, wobei der Schritt des Signalisierens eines Erhalts der Datei an den ersten Freigaberechner (6) und/oder an den zweiten Freigaberechner (8) das Senden einer Email umfasst.

7. Arbeitsverfahren (14) nach einem der vorhergehenden Ansprüche, wobei das Transferieren der Datei gemäß dem Secure File Transfer Protocol erfolgt.

8. Arbeitsverfahren (14) nach einem der vorhergehenden Ansprüche, wobei der erste Datenserver (9) und der zweite Datenserver (10) über eine Firewall (13) miteinander verbunden sind.

9. Arbeitsverfahren (14) nach einem der vorhergehenden Ansprüche, wobei nach jedem Schritt des Arbeitsverfahrens ein Eintrag in eine Log-Datei geschrieben wird.

10. System (1), aufweisend
- ein erstes Netzwerk (2) mit einem ersten Rechner (5) und einem ersten Freigaberechner (6);
- ein zweites Netzwerk (4) mit einem zweiten Rechner (7) und einem zweiten Freigaberechner (8);
- ein Perimeter-Netzwerk (3) mit einem ersten Datenserver (9) und mit einem zweiten Datenserver (10);
wobei
- das erste Netzwerk (2) und das zweite Netzwerk (4) über jeweils eine Firewall (11, 12) mit dem Perimeter-Netzwerk (3) verbunden ist;
- der erste Datenserver (9) einen von dem ersten Rechner (5) erreichbaren Speicherbereich sowie einen von dem ersten Rechner (5) und dem zweiten Rechner (7) nicht-erreichbaren Speicherbereich aufweist; und
- das System (1) dazu eingerichtet ist, ein Arbeitsverfahren (14) nach einem der Ansprüche 1 bis 9 auszuführen.

## Claims

1. Working method (14) for a system (1) for the secure provision of a file of a first computer (5) of a first network (2) for retrieval by a second computer (7) of a second network (4), wherein the first network (2) and the second network (4) are connected in each case via a firewall (11, 12) to a perimeter network (3),
with the steps:
- transferring the file from the first computer (5) into a storage area, accessible to the first computer (5), of a first data server (9) which is assigned to the perimeter network (3);
- signaling of a receipt of the file in the accessible storage area of the first data server (9) by the first data server (9) to a first release computer (6) of the first network (2) with a release request to forward the file;
- transferring the file to a storage area of the first data server (9) inaccessible to the first computer (5) following receipt of a release for the forwarding by the first release computer (6);
- signaling of a receipt of the file in the inaccessible storage area of the first data server (9) by the first data server (9) to a second data server (10) of the perimeter network (3);
- signaling of a receipt of the file in the inaccessible storage area of the first data server (9) by the second data server (10) to a second release computer (8) of the second network (4) with a release request to forward the file;
- transferring the file into a storage area of the second data server (10) inaccessible to the second computer (7) following receipt of a release for the forwarding of the file by the second computer; and
- transferring the file into a storage area of the second data server (10) accessible to the second computer (10).

2. Working method (14) according to Claim 1, wherein, following the step of transferring the file onto the accessible storage area of the first data server (9), the first data server (9) checks the file for data technology risks.

3. Working method (14) according to one of the preceding claims, wherein, following the step of transferring the file into the secure storage area of the second data server (10), the second data server (10) checks the file for data technology risks.

4. Working method (14) according to one of Claims 2 or 3, wherein, if a data technology risk is identified, the file is discarded and the working method is discontinued.

5. Working method (14) according to one of the preceding claims, wherein, in the step of signaling a receipt of the file to the first release computer (6) and/or to the second release computer (8) within a predefined time interval following receipt of no release to forward the file, the file is discarded and the working method is discontinued.

6. Working method (14) according to one of the preceding claims, wherein the step of signaling a receipt of the file to the first release computer (6) and/or to the second release computer (7) comprises the sending of an email.

7. Working method (14) according to one of the preceding claims, wherein the file is transferred according to the Secure File Transfer Protocol.

8. Working method (14) according to one of the preceding claims, wherein the first data server (9) and the second data server (10) are interconnected via a firewall (13).

9. Working method (14) according to one of the preceding claims, wherein an entry is written into a log file after each step of the working method.

10. System (1), having
- a first network (2) with a first computer (5) and a first release computer (6);
- a second network (4) with a second computer (7) and a second release computer (8);
- a perimeter network (3) with a first data server (9) and with a second data server (10);
wherein
- the first network (2) and the second network (4) are connected in each case via a firewall (11, 12) to the perimeter network (3);
- the first data server (9) has a storage area accessible to the first computer (5) and a storage area inaccessible to the first computer (5) and the second computer (7); and
- the system (1) is configured to carry out a working method (14) according to one of Claims 1 to 9.

## Revendications

1. Procédé d'exploitation (14) destiné à un système (1) permettant de fournir de manière sécurisée un fichier d'un premier calculateur (5) d'un premier réseau (2) en vue de son appel par un second calculateur (7) d'un second réseau (4), dans lequel le premier réseau (2) et le second réseau (4) sont respectivement reliés à un réseau périmétrique (3) par l'intermédiaire d'un pare-feu (11, 12), comprenant les étapes consistant à :
- transférer le fichier du premier calculateur (5) vers une zone de mémoire, accessible au premier calculateur (5), d'un premier serveur de données (9) qui est affecté au réseau périmétrique (3) ;
- signaler une réception du fichier dans la zone de mémoire accessible du premier serveur de données (9) par le premier serveur de données (9) à un premier calculateur d'autorisation (6) du premier réseau (2) au moyen d'une demande d'autorisation de réacheminement du fichier ;
- transférer le fichier à une zone de mémoire, non accessible au premier calculateur (5), du premier serveur de données (9) après la réception d'une autorisation de réacheminement par le premier calculateur d'autorisation (6) ;
- signaler une réception du fichier dans la zone de mémoire non accessible du premier serveur de données (9) par le premier serveur de données (9) à un second serveur de données (10) du réseau périmétrique (3) ;
- signaler une réception du fichier dans la zone de mémoire non accessible du premier serveur de données (9) par le second serveur de données (10) à un second calculateur d'autorisation (8) du second réseau (4) au moyen d'une demande d'autorisation de réacheminement du fichier ;
- transférer le fichier dans une zone de mémoire, non accessible au second calculateur (7), du second serveur de données (10) après réception d'une autorisation de réacheminement du fichier par le second calculateur d'autorisation (8) ; et
- transférer le fichier à une zone de mémoire, accessible au second calculateur (7), du second serveur de données (10).

2. Procédé d'exploitation (14) selon la revendication 1, dans lequel, après l'étape de transfert du fichier à la zone de mémoire accessible du premier serveur de données (9), le premier serveur de données (9) vérifie le fichier en ce qui concerne les menaces liées aux données.

3. Procédé d'exploitation (14) selon l'une quelconque des revendications précédentes, dans lequel, après l'étape de transfert du fichier dans la zone de mémoire sécurisée du second serveur de données (10), le second serveur de données (10) vérifie le fichier en ce qui concerne les menaces liées aux données.

4. Procédé d'exploitation (14) selon l'une quelconque des revendications 2 ou 3, dans lequel, lorsqu'il est établi qu'il existe une menace liée aux données, le fichier est rejeté et le procédé d'exploitation est interrompu.

5. Procédé d'exploitation (14) selon l'une quelconque des revendications précédentes, dans lequel, lors de l'étape de signalisation d'une réception du fichier au premier calculateur d'autorisation (6) et/ou au second calculateur d'autorisation (8) au cours d'un intervalle de temps prédéterminé après qu'aucune autorisation de réacheminement du fichier n'a été reçue, le fichier est rejeté et le procédé d'exploitation est interrompu.

6. Procédé d'exploitation (14) selon l'une quelconque des revendications précédentes, dans lequel l'étape de signalisation d'une réception du fichier au premier calculateur d'autorisation (6) et/ou au second calculateur d'autorisation (8) comprend l'envoi d'un courrier électronique.

7. Procédé d'exploitation (14) selon l'une quelconque des revendications précédentes, dans lequel le transfert du fichier est effectué conformément au protocole de transfert de fichier sécurisé (Secure File Transfer Protocol).

8. Procédé d'exploitation (14) selon l'une quelconque des revendications précédentes, dans lequel le premier serveur de données (9) et le second serveur de données (10) sont connectés l'un à l'autre par l'intermédiaire d'un pare-feu (13).

9. Procédé d'exploitation (14) selon l'une quelconque des revendications précédentes, dans lequel, après chaque étape du procédé d'exploitation, une entrée est inscrite dans un fichier journal.

10. Système (1), comprenant
- un premier réseau (2) comportant un premier calculateur (5) et un premier calculateur d'autorisation (6) ;
- un second réseau (4) comportant un second calculateur (7) et un second calculateur d'autorisation (8) ;
- un réseau périmétrique (3) comportant un premier serveur de données (9) et un second serveur de données (10) ;
dans lequel
- le premier réseau (2) et le second réseau (4) sont respectivement connectés au réseau périmétrique (3) par l'intermédiaire d'un pare-feu (11, 12) ;
- le premier serveur de données (9) comprend une zone de mémoire accessible au premier calculateur (5) et une zone de mémoire non accessible au premier calculateur (5) et au second calculateur (7) ; et
- le système (1) est conçu pour mettre en oeuvre un procédé d'exploitation (14) selon l'une quelconque des revendications 1 à 9.
